# EUROPÄISCHE PATENTANMELDUNG

(11) **EP 2 282 098 A2**
(43) Veröffentlichungstag der Anmeldung: **09.02.2011**
(21) Anmeldenummer: 10008226.2
(22) Anmeldetag: 06.08.2010
(51) Int. Cl.: F16L 21/03, F16L 21/035, E03F 3/04

(54) **Dichtung mit verschiebbarem Dichtungsteil**

(30) Priorität: 07.08.2009 DE 102009036513
(71) Anmelder: Phoenix Dichtungstechnik GmbH, 99880 Waltershausen (DE); Theodor Cordes GmbH & Co. KG, 48308 Senden-Bösensell (DE)
(72) Erfinder: Höft, Heiko, 21224 Rosengarten (DE)
(74) Vertreter: Stüven, Ralf

(57) **Zusammenfassung**

Die vorliegende Erfindung betrifft eine Keilgleitdichtung für Verbindungen von Rohren und Schächten aus härtbarem Material, insbesondere Beton oder Kunststoff, sowie eine Rohr- oder Schachtverbindungsanordnung mit einem Spitzende und einer Muffe, die eine Keilgleitdichtung umfassen. Die erfindungsgemäBe Keilgleitdichtung weist eine Basis (2) und einen in einem Auflagebereich (12) der Basis (2) zumindest teilweise aufliegenden Dichtungskeil (3) aus elastomerem Material auf; wobei der Dichtungskeil (3) in Richtung (4) entlang der Basis (2) bis hinter das Ende (7) der Basis (2) verschiebbar ist.

## Beschreibung

### DICHTUNG MIT VERSCHIEBBAREM DICHTUNGSTEIL

Die vorliegende Erfindung betrifft eine Keilgleitdiehtung für Verbindungen von Rohren und Schächten aus härtbarem Material, insbesondere Beton oder Kunststoff, sowie eine Rohr- oder Schachtverbindungsanordnung mit einem Spitzende und einer Muffe, die eine Keilgleitdichtung umfassen.

Keilgleitdichtungen für Rohr- und Schachtverbindungen aus einer Muffe und dem hierzu korrespondierenden Spitzende sind im Stand der Technik grundsätzlich bekannt. Diese häufig im Querschnitt im Wesentlichen keilförmigen Dichtungen sind auf dem Spitzende oder im Muffenspiegel einer Steckmuffenverbindung angeordnet und sorgen für die Abdichtung der Verbindung, indem sie den Spalt zwischen Muffe und Spitzende überbrücken. Eine solche Keilgleitdichtung ist beispielsweise in der DE 101 48 986 A1 beschrieben, wobei die dortige Keilgleitdichtung noch zusätzlich mit einem speziellen Rollkörper ausgestattet ist.

Die aus dem Stand der Technik bekannten Keilgleitdichtungen weisen den Nachteil auf, dass der von ihnen überbrückbare Spaltweitenbereich vergleichsweise limitiert ist. Darüber hinaus ist die Montage insbesondere bei kleinen Spaltweiten häufig erschwert und es kann zu Muffensprengungen kommen.

Aufgabe der vorliegenden Erfindung ist es daher, eine Keilgleitdichtung bereitzustellen, die die obigen Nachteile des Standes der Technik nicht aufweist, und insbesondere bei gleicher Bauhöhe einen großen Spaltweitenbereich abdeckt, die Montage von Steckmuffenverbindungen erleichtert und Muffensprengungen verhindert.

Gelöst wird die Aufgabe mit den in Anspruch 1 und 8 angegebenen Gegenständen. Vorteilhafte Ausgestaltungen der Erfindung sind in den Unteransprüchen angegeben.

Die vorliegende Erfindung stellt eine Keilgleitdichtung für Verbindungen von Rohren und Schächten aus härtbarem Material, insbesondere Beton oder Kunststoff, bereit wobei die Keilgleitdichtung eine Basis und einen in einem Auflagebereich der Basis zumindest teilweise aufliegenden Dichtungskeil aus elastomerem Material aufweist, und wobei der Dichtungskeil entlang der Basis bis hinter das Ende der Basis verschiebbar ist.

Der auf der Basis aufliegende Dichtungskeil bildet die gesamte Dichtungshöhe, das heißt die maximal überbrückbare Spaltweite. Bei großen Spaltweiten verbleibt der Dichtungskeil in dem Auflagebereich der Basis. Bei kleinen Spaltweiten wird der Dichtungskeil jedoch durch die Montagebewegung bis hinter die Basis verschoben, wodurch die wirkende Dichtungshöhe reduziert wird. Dadurch wird die Montage erleichtert und es kommt nicht zu Muffensprengungen. Mit der erfindungsgemäßen Dichtung kann bei gleicher Bauhöhe ein größerer Spaltweitenbereich abgedeckt werden als mit den bisherigen Keilgleitdichtungen.

In einer bevorzugten Ausführungsform besteht der Dichtungskeil aus einem anderen elastomeren Material als die Basis. Vorzugsweise besteht der Dichtungskeil dabei aus einem härteren elastomeren Material als die Basis. Beispielsweise kann der Dichtungskeil eine Härte von 50 Shore aufweisen, während die Basis eine Harte von 40 Shore aufweist. Die aus unterschiedlichen elastomeren Materialien zusammengesetzte Keilgleitdichtung kann zum Beispiel durch Koextrusion hergestellt werden.

In einer weiteren bevorzugten Ausführungsform der Erfindung weist die Basis im Auflagebereich des Dichtungskeils eine Mulde oder Nut auf. Dies ist vorteilhaft, um ein vorzeitiges Verrutschen des Dichtungskeils zu verhindern. Alternativ oder zusätzlich kann die Basis hierzu in Gleitrichtung des Dichtungskeils hinter dem Auflagebereich des Dichtungskeils einen Sattel aufweisen.

Die erfindungsgemäße Keilgleitdichtung kann, beispielsweise an ihrer Basis, einen oder mehrere Verankerungsfüße ausweisen. Mit Hilfe der Verankerungsfüße kann die Keilgleitdichtung im Muffenspiegel oder auf dem Spitzende einer Rohr- oder Schachtverbindung befestigt werden.

In einer weiteren bevorzugten Ausführungsform der Erfindung ist die Basis im Auflagebereich des Dichtungskeils mit einem Gleitmittel versehen. Dies erleichtert das Verschieben des Dichtungskeils.

In einem weiteren Aspekt betrifft die Erfindung eine Rohr- oder Schachtverbindungsanordnung mit einem Spitzende und einer Muffe, die eine erfindungsgemäße Keilgleitdichtung umfasst. Die Keilgleitdichtung kann dabei auf dem Spitzende oder innerhalb der Muffe angeordnet sein.

Die Erfindung wird im Folgenden anhand bevorzugter Ausführungsformen und der beigefügten Figuren näher beschrieben. ,Es zeigt
Figur 1 einen Schnitt durch eine Ausfuhrungsform der erfindungsgemäßen Keilgleitdichtung,
Figur 2 einen Schnitt durch eine weitere Ausführungsform der erfindungsgemäßen Keilgleitdichtung,
Figur 3 einen Schnitt durch eine weitere Ausführungsform der erfindungsgemäßen Keilgleitdichtung, und
Figur 4 eine weitere Ausführungsform der erfindungsgemäßen Keilgleitdichtung im Schnitt, wobei die Keilgleitdichtung in Figur 4B eine geringere Spaltweite überbrückt als die in Figur 4A dargestellte Keilgleitdichtung.

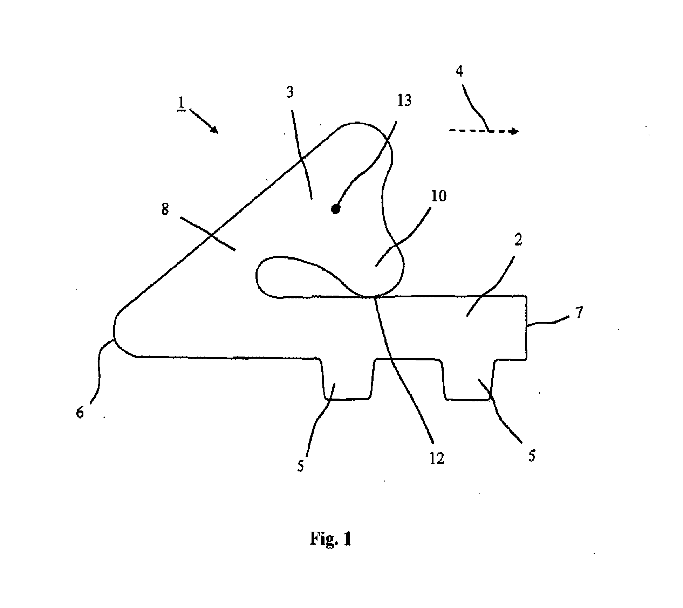

Figur 1 zeigt einen Schnitt durch eine bevorzugte Ausführungsform einer Keilgleitdichtung 1 gemäß der vorliegenden Erfindung. Die im Wesentlichen keilförmige Keilgleitdichtung 1 besitzt eine Basis 2 und einen Dichtungskeil 3. Die Längsachsen von Basis 2 und Dichtungskeil 3 bilden am Ende 6 der Basis 2 einen spitzen Winkel. Der Dichtungskeil 3 ist hier im Wesentlichen keulen- bzw. Y-förmig ausgebildet und liegt mit dem Ende eines der Schenkel 10 des Y im Auflagebereich 12 auf der Basis 2 auf. Ein vom Massenschwerpunkt 13 des Dichtungskeils 3 auf die Basis 2 gefälltes Lot liegt dabei in etwa in der Mitte zwischen den Enden 6 und 7 der Basis 2. Die Basis 2 ist darüber hinaus mit Verankerungsfüßen 5 versehen. Die Keilgleitdichtungen 1 kann, zum Beispiel mit Hilfe der Verankerungsfüße 5, im Muffenspiegel oder außen auf dem Spitzende einer hier nicht dargestellten Rohr- oder Schachtverbindung angeordnet sein. Bei der Montage wird entweder die Muffe oder das Spitzende auf die Keilgleitdichtung 1 aufgeschoben, wobei der Dichtungskeil 3 je nach abzudichtender Spaltweite verpresst und gegebenenfalls in Richtung 4 zum Ende 7 der Basis 2 hin verschoben wird. Der Dichtungskeil 3 besteht hier aus einem härteren Material als die Basis 2, wobei Dichtungskeil 3 und Basis 2 im Gelenkbereich 8 miteinander verbunden sind. Dies kann beispielsweise durch Koextrusion geschehen, so dass die Keitgleitdichtung 1 einstückig ausgebildet ist.

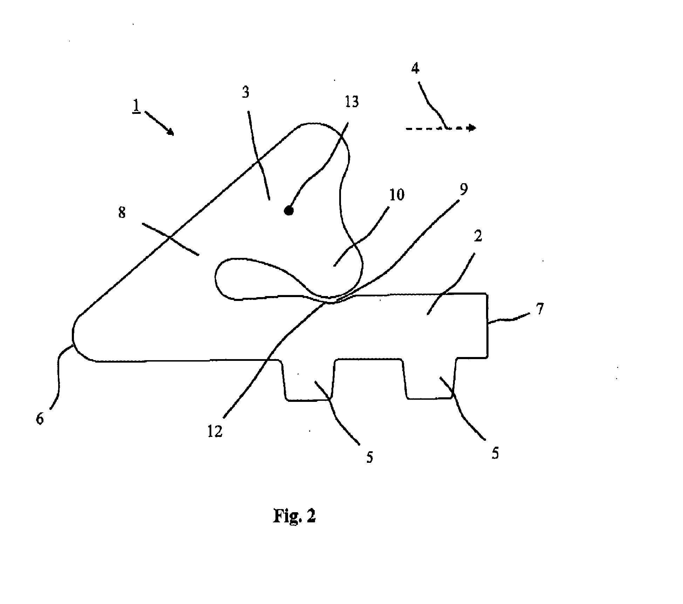

Figur 2 zeigt die in Figur 1 dargestellte Ausfuhrungsform der erfindungsgemäßen Keilgleitdichtung 1, wobei hier in der Basis 2 im Auflagebereich 12 eine Mulde bzw. Nut 9 vorgesehen ist.

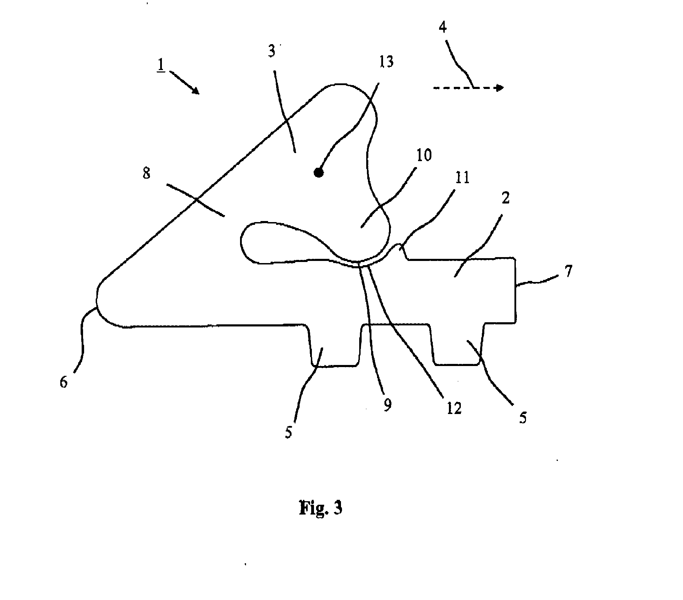

Figur 3 zeigt die in Figur 2 dargestellte Ausfühtungsform der erfindungsgemäßen Keilgleitdichtung 1, wobei hier in Richtung 4 zum Ende 7 der Basis 2 hin hinter der Mulde 9 ein Sattel 11 vorgesehen ist, um ein vorzeitiges Verrutschen des Dichtungskeils 3 zu verhindern.

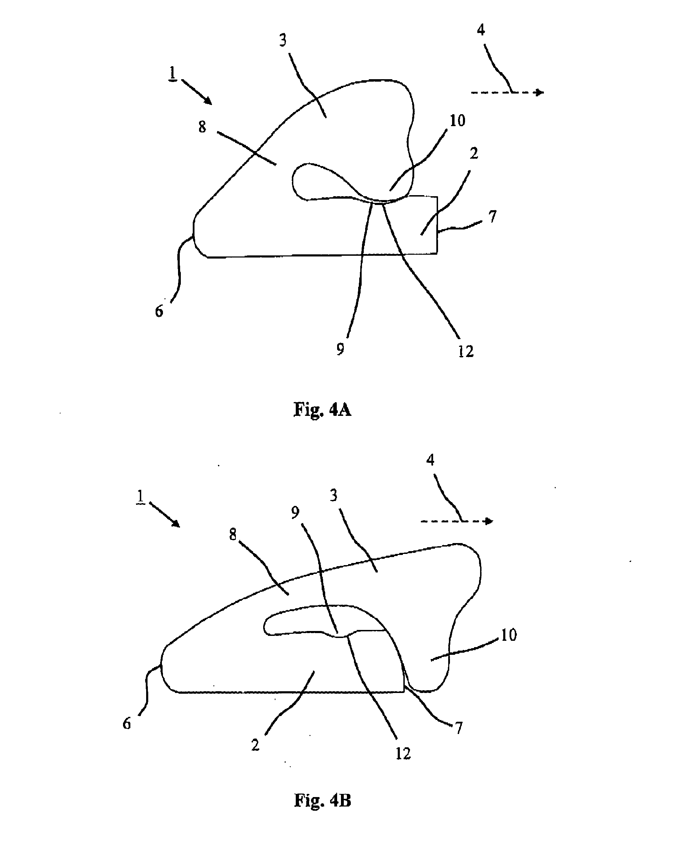

Figur 4 zeigt eine Ausführongsform der erfindungsgemaßen Keilgleitdichtung 1 ohne Verankerungsfuß bzw. Verankerungsfuße (5), wobei unterschiedliche Einbausituationen dargestellt sind. Figur 4A zeigt eine Einbausituation, bei der ein vergleichsweise großer Spalt zu überbrücken ist. Der Dichtungskeil 3 ist daher nur leicht in Richtung 4 zum Ende 7 der Basis 2 hin verschoben und wird in den hinteren Teil der Mulde 9 gepresst. Figur 4B dagegen zeigt eine Einbausituation mit vergleichsweise geringer zu überbrückender Spaltweite. Der Dichtungskeil 3 ist aus der Mulde 9 herausgedrückt und über das Ende 7 der Basis 2 hinaus verschoben worden. Der Gelenkbereich 8 hat sich dabei gestreckt.

## Patentansprüche

1. Keilgleitdichtung für Verbindungen von Rohren und Schächten aus härtbarem Material, insbesondere Beton oder Kunststoff, wobei die Keilgleitdichtung (1) eine Basis (2) und einen in einem Auflagebereich (12) der Basis (2) zumindest teilweise aufliegenden Dichtungskeil (3) aus elastomerem Material aufweist, und wobei der Dichtungskeil (3) in Richtung (4) entlang der Basis (2) bis hinter das Ende (7) der Basis (2) verschiebbar ist.

2. Keilgleitdichtung nach Anspruch 1, **dadurch gekennzeichnet, dass** der Dichtungskeil (3) aus einem anderen elastomeren Material besteht als die Basis (2).

3. Keilgleitdichtung nach Anspruch 2, **dadurch gekennzeichnet, dass** der Dichtungskeil (3) aus einem härteren elastomeren Material besteht als die Basis (2).

4. Keilgleitdichtung nach einem der vorhergehenden Ansprüche, **dadurch gekennzeichnet, dass** die Basis (2) im Auflagebereich (12) des Dichtungskeils (3) eine Mulde oder Nut (9) aufweist.

5. Keilgleitdichtung nach einem der vorhergehenden Ansprüche, **dadurch gekennzeichnet, dass** die Basis (2) in Richtung des Endes (7) der Basis (2) hinter dem Auflagebereich (12) des Dichtungskeils (3) einen Sattel (11) aufweist.

6. Keilgleitdichtung nach einem der vorhergehenden Ansprüche, **dadurch gekennzeichnet, dass** die Basis (2) mindestens einen Verankerungsfuß (5) aufweist.

7. Keilgleitdichtung nach einem der vorhergehenden Ansprüche, **dadurch gekennzeichnet, dass** die Basis (2) im Auflagebereich (12) des Dichtungskeils (3) mit einem Gleitmittel versehen ist.

8. Rohr- oder Schachtverbindungsanordnung mit einem Spitzende und einer Muffe, umfassend eine Keilgleitdichtung (1) nach einem der Ansprüche 1 bis 7.

9. Rohr- oder Schachtverbindungsanordnung nach Anspruch 8, **dadurch gekennzeichnet, dass** die Keilgleitdichtung (1) auf dem Spitzende angeordnet ist.

10. Rohr- oder Schachtverbindungsanordnung nach Anspruch 8, **dadurch gekennzeichnet, dass** die Keilgleitdichtung (1) innerhalb der Muffe angeordnet ist.
